# EUROPÄISCHE PATENTANMELDUNG

(11) **EP 2 433 837 A1**
(43) Veröffentlichungstag der Anmeldung: **28.03.2012**
(21) Anmeldenummer: 11182008.0
(22) Anmeldetag: 20.09.2011
(51) Int. Cl.: B60R 1/00, G02B 13/06, G03B 37/04, G06T 7/00, B62D 49/06, G02B 17/08, H04N 13/02, H04N 5/225, G01B 11/14, G06K 9/00, G05D 1/02

(54) **Optisches Instrument und Verfahren zur optischen Überwachung der Umgebung sich langsam bewegender Fahrzeuge**

(30) Priorität: 27.09.2010 DE 102010041490
(71) Anmelder: Deere & Company, Moline, IL 61265-8098 (US)
(72) Erfinder: Kormann, Dr. Georg, 66482 Zweibrücken (DE); Correns, Nico, 99425 Weimar (DE); Söldner, Dietrich, 07749 Jena (DE)
(74) Vertreter: Holst, Sönke

(57) **Zusammenfassung**

Die Erfindung betrifft ein optisches Instrument zur Beobachtung der Umgebung, umfassend ein Übersichtsobjektiv mit einer Symmetrieachse, welches einen ersten Umgebungsbereich zirkular um die Symmetrieachse erfaßt. Das optische Instrument umfasst außerdem ein Beobachtungsobjektiv (2), welches einen zweiten Umgebungsbereich erfaßt und auf der Symmetrieachse in einem vorgegebenen Abstand zum Übersichtsobjektiv um die Symmetrieachse um 360° schwenkbar angeordnet ist. Die optische Achse des Beobachtungsobjektivs (2) steht senkrecht zur Symmetrieachse des Übersichtsobjektivs. Das optische Instrument weist außerdem eine Abbildungsoptik auf, die die von den Objektiven erfaßten Umgebungsbereiche gleichzeitig als Übersichtsbild und Beobachtungsbild auf mindestens einen Flächendetektor (3) abbildet. Mittels einer Steuereinheit (4) läßt sich mindestens das Beobachtungsobjektiv (2) ansteuern. Eine Auswerteeinheit (5) schließlich nimmt eine Bildauswertung vor und bestimmt für ausgewählte Objekte, die sowohl im Übersichtsbild als auch im Beobachtungsbild erkannt sind, die Entfernung zu diesen Objekten. Die ermittelte Entfernung wird an die Steuereinheit (4) zur weiteren Verwertung übermittelt.

## Beschreibung

Die Erfindung betrifft ein optisches Instrument zur Beobachtung der Umgebung, insbesondere von sich langsam bewegenden Fahrzeugen wie Landmaschinen ggf. mit Anbaugeräten, ein Verfahren zur optischen Überwachung des Raumes in der Umgebung solcher Fahrzeuge, sowie die Verwendung eines solchen optischen Instrumentes bei dem genannten Verfahren. Das Instrument ist aber auch für den stationären Einsatz wie beispielsweise die Überwachung von Kreuzungen geeignet.

Im Stand der Technik sind verschiedene Verfahren und Anordnungen bekannt, mit denen sich der Bereich in der Umgebung eines optischen Instruments möglichst vollständig, d.h. in einem Winkel von 360°, beobachten läßt. So wird in der EP 1 375 253 A2 ein Verfahren zur Überwachung des Innen- bzw. Außenraumes eines Fahrzeuges mit einer Rundsichtkamera beschrieben. Bei der Rundsichtkamera handelt es sich um ein katadioptrisches System, die eine (erste) übliche CCD-Kamera und einen von der Kamera abgesetzten kugel- oder parabolförmig geformten konvexen Spiegel umfasst. In einem zentralen Bereich bildet die Kamera sich aufgrund der Spiegelform selbst ab, dieser kann elektronisch ausgeblendet werden. Eine zweite Kamera dient zur vergrößerten Erfassung von mit der ersten Kamera erfassten, durch eine Auswertungseinrichtung selektierten Bereichen

In der DE 10 2005 006 754 A1 werden ein sphärischer Spiegel und eine Kamera zur Rundumsichterfassung verwendet. Im zentralen Bereich ist ein zweites Spiegelsystem mit einem ebenen Spiegel zur Abbildung eines zweiten interessierenden Raumbereichs vorgesehen. In dem zentralen Bereich wird ein Detail des Bereichs, den die Rundsichtkamera abbildet, gegenüber dieser Abbildung vergrößert dargestellt. Der Ausschnitt, der in den zentralen Bereich abgebildet wird, kann dabei auch automatisch mit Hilfe der Abbildungen der Rundsichtkamera ausgewählt und das zusätzliche Spiegelsystem darauf eingestellt werden. Mit Hilfe eines Bildverarbeitungssystems läßt sich das Bild der Rundsichtkamera entzerren, die Bildverarbeitung umfasst aber auch Mittel zur Durchführung eines Triangulationsverfahrens zur Positionsbestimmung von Objekten, die in beiden Bildern zu sehen sind. Dies läßt sich insbesondere dann nutzen, wenn das Kamerasystem Objekte, insbesondere Fußgänger im Außenbereich eines Kraftfahrzeugs erkennen soll.

Ein anderes optisches System zur räumlichen Rundumüberwachung ist in der DE 10 2004 047 932 A1 beschrieben. Auch dieses System umfasst zwei Spiegeloptiken, von denen die eine insbesondere einen konvex gekrümmten Spiegel zur Rundumabbildung mit einem Winkel von 360° umfasst, und das andere spiegeloptische System einen ebenen Spiegel zur Detailabbildung. Dieser ebene Spiegel ist beweglich und mit Hilfe einer translatorischen Bewegung relativ zum Objektiv kann zusätzlich eine Zoomfunktion realisiert werden.

Ein anderes Bilderfassungssystem, umfassend eine Kamera und zwei Spiegelsysteme mit einem gekrümmten und einem planaren Spiegel wird in der DE 10 2004 056 349 A1 beschrieben. Hierbei wird mittels des gekrümmten Spiegels ein Nahbereich mit einem Blickwinkel von etwa 180° erfaßt, mit Hilfe des planaren Spiegels oder direkt mit der Kamera wird der Fernbereich erfaßt. Das System ist zum Einsatz in Kraftfahrzeugen bestimmt.

In der GB 2 368 221 A wird eine Kamera beschrieben, die sowohl die Rundumsicht als auch einen direkten Abbildungsmodus aufweist. Die Kamera kann auch gleichzeitig in beiden Modi betrieben werden. Zur Realisierung werden, wie auch in den vorangehend erwähnten Veröffentlichungen, katadioptrische und damit relativ komplex aufgebaute Optiken verwendet.

In der WO 03/026272 A2 werden neben der Verwendung von auf Spiegeln basierenden Systemen auch solche Abbildungsoptiken beschrieben, die im Wesentlichen aus einer einzigen Linse, die teilweise verspiegelt ist, bestehen. Ein Teil der Linse ist so ausgestaltet, dass er ein Übersichtsbild abbildet, ein anderer Teil der Linse im zentralen Bereich, der sonst als blinder Fleck dargestellt bzw. die Kameraoptik selbst abbilden würde, ist so ausgestaltet, dass er einen Teilbereich der Umgebung vergrößert auf einen Detektor abbildet. Der Aufbau der Linse ist sehr kompliziert, zur genauen Positionsbestimmung ist das System aufgrund der geringen Abstände der entsprechend abbildenden Linsenbereiche kaum geeignet.

Eine ganz andere Lösung wird in der DE 29 26 731 C2 beschrieben, hier werden mehrere Objektive gleicher Brennweite auf einem Kreis angeordnet, so dass auf diese Weise eine entsprechende Abbildung der Rundumsicht erfolgen kann, entsprechende weiterführende Strahlengänge vorausgesetzt.

Auf Spiegel vollständig verzichten können periskopartige Systeme, wie sie beispielsweise im 5. Band "Die Fernrohre und Entfernungsmesser" von A. König (veröffentlicht im Verlag Julius Springer, 1923, Seiten 63 bis 70) beschrieben sind. Dabei handelt es sich um Systeme mit einem sogenannten Ringbildobjektiv, welches die Umgebung in einem Winkel von 360° abbildet, sowie einem Beobachtungsobjektiv, welches einen Detailbereich der Umgebung abbildet. Ein Beobachter nimmt das Bild des Ringobjektivs als Ring wahr, in dessen Mitte ein leerer Fleck bleibt, der aber mit dem Beobachtungsbild des Beobachtungsobjektivs ausgefüllt ist. Beide Objektive beeinflussen sich nicht gegenseitig. Eine Nutzung zur Positionsbestimmung bzw. Entfernungsbestimmung wird in diesem Zusammenhang nicht angegeben.

Aufgabe der Erfindung ist es, ein optisches Instrument zur optischen Überwachung des Raumes bereitzustellen, welches möglichst einfach und robust aufgebaut ist, kostengünstig hergestellt werden kann, insbesondere für die Entfernungsmessung geeignet ist und auch für die automatische Steuerung von Landmaschinen geeignet ist, sowie ein Verfahren zur Überwachung des Raumes, in dem dieses optische Instrument vorteilhaft eingesetzt werden kann.

Diese Aufgabe wird gelöst durch ein optisches Instrument zur Beobachtung der Umgebung, welches ein Übersichtsobjektiv mit einer Symmetrieachse umfasst, wobei das Übersichtsobjektiv einen ersten Umgebungsbereich zirkular um die Symmetrieachse erfaßt. Das optische Instrument umfasst außerdem ein Beobachtungsobjektiv, welches einen zweiten Umgebungsbereich erfaßt und auf der Symmetrieachse in einem vorgegebenen Abstand zum Übersichtsobjektiv angeordnet ist. Das Beobachtungsobjektiv ist um die Symmetrieachse um einen Winkelbereich von vorzugsweise 360° (oder weniger) schwenkbar angeordnet. Die optische Achse des Beobachtungsobjektivs steht senkrecht oder zumindest näherungsweise senkrecht zur Symmetrieachse des Übersichtsobjektivs. Bevorzugt ist das Beobachtungsobjektiv um einen Vollkreis schwenkbar, da dann die gesamte Umgebung unter gleichen Bedingungen beobachtet und das Beobachtungsobjektiv auf einen interessierenden Punkt in jedem Fall zentriert ausgerichtet werden kann. Die Formulierung von bis zu einschließlich 360'" schließt aber auch kleinere Winkelbereiche ein, die nicht den Vollkreis ausfüllen. Das optische Instrument umfasst zudem mindestens einen Flächendetektor und eine Abbildungsoptik, die den vom Übersichtsobjektiv erfaßten ersten Umgebungsbereich und den vom Beobachtungsobjektiv erfaßten zweiten Umgebungsbereich gleichzeitig als Übersichtsbild bzw. Beobachtungsbild auf den mindestens einen Flächendetektor abbildet. Ferner umfasst das optische Instrument auch eine Steuereinheit, die so ausgestaltet ist, dass sie mindestens einen Aktor zur Verstellung der Brennweite und/oder des Abstands zwischen dem Beobachtungsobjektiv und dem Übersichtsobjektiv und/oder des Winkels des Beobachtungsobjektivs um die Symmetrieachse des Übersichtsobjektivs ansteuert. Die Steuereinheit kann aber auch komplexere Aufgaben wie die Steuerung und Kontrolle der Lenkung und/oder des Antriebs des Fahrzeugs übernehmen. Schließlich umfasst das optische Instrument auch eine Auswerteeinheit, die eine Bildauswertung vornimmt und für ausgewählte Objekte, die sowohl im Übersichtsbild als auch im Beobachtungsbild erkannt worden sind, die Entfernung zu diesen Objekten bestimmt und diese an die Steuereinheit zur weiteren Verwertung, zusammen mit der Position des Objektes übermittelt. Auswerteeinheit und Steuereinheit können auch gemeinsam in eine einzige Kontrolleinheit integriert sein.

Mittels des Übersichtsobjektives wird ein zirkularer Umgebungsbereich erfaßt, also ein Bereich von 360° um die Symmetrieachse. Gleichzeitig erfaßt das Beobachtungsobjektiv einen zweiten Umgebungsbereich, der einen Ausschnitt des ersten Umgebungsbereiches darstellt. Die Auswahl der Objekte erfolgt anhand des Übersichtsbildes. Nachdem das Beobachtungsobjektiv auf das ausgewählte Objekt eingestellt wurde, läßt sich die absolute Entfernung zu dem Objekt anhand der unterschiedlichen Blickwinkel von Übersichtsobjektiv und Beobachtungsobjektiv auf das Objektbestimmen, wobei zusätzlich die jeweils erfasste Größe des Objekts und der Abstand zwischen den Objektiven berücksichtigt werden kann. Je größer der Abstand zwischen den Objektiven entlang der Symmetrieachse ist, desto besser sind der stereoskopische Effekt und damit die räumliche Auflösung.

Die Steuereinheit kann, wenn die Auswertung ergeben hat, dass die Entfernung beispielsweise eine gewisse kritische Grenze unterschritten hat, entsprechende weitere Schritte einleiten. Befinden sich das optische Instrument und die Steuereinheit beispielsweise in einem Fahrzeug, insbesondere in einer Landmaschine, so kann die Steuereinheit das Fahrzeug anhalten, seine Geschwindigkeit verlangsamen oder aber auch Ausweichmanöver einleiten, um allgemein eine Kollision mit dem ausgewählten Objekt zu vermeiden. Das optische Instrument kann ebenso zur Erfassung von relativen Positionen mehrerer Fahrzeuge zueinander und ggf. zur selbsttätigen Lenkung eines oder beider Fahrzeuge verwendet werden.

Üblicherweise - aber nicht zwingend - ist die Symmetrieachse genau vertikal im Raum orientiert, sodass die optische Achse des Beobachtungsobjektivs horizontal (oder geringfügig nach unten geneigt) verläuft, um Objekte auf dem Erdboden erkennen zu können. Das optische Instrument kann dabei starr an einem Fahrzeug befestigt sein oder es wird passiv (z. B. durch ein Pendel) oder aktiv (mittels eines Neigungssensors und eines Aktors) stets vertikal ausgerichtet. Die Anbringung des optischen Instruments erfolgt vorzugsweise an einer hinreichend hohen Stelle des Fahrzeugs, an der eine Rundumsicht möglich ist.

In einer bevorzugten Ausgestaltung analysiert die Auswerteeinheit zeitlich sequentiell vom Flächendetektor aufgezeichnete Übersichtsbilder hinsichtlich sich relativ zum optischen Instrument bewegender Objekte. Falls ein solches Objekt, welches sich bewegt und sich insbesondere vergrößert, erkannt wird, übermittelt die Auswerteeinheit der Steuereinheit die anhand der Sequenz von Übersichtsbildern bestimmte Position. Bei einer Kopplung mit einem Odometer oder satellitengestützter Navigation kann vorab auch eine erste, grobe Entfernungsbestimmung mit Hilfe eine Triangulationsverfahrens erfolgen, wenn sich das Objekt beispielsweise seitlich bewegt, oder auch anhand des Maßes der Vergrößerung. Ist das optische Instrument mit und einem Flächendetektor ausgestaltet, der mittels Laufzeitmessungen auch eine Bestimmung der Entfernung erlaubt, so kann die grobe Entfernungsbestimmung auch mittels der Laufzeitauswertungen des Flächendetektors erfolgen. Für eine genaue Entfernungsbestimmung richtet jedoch die Steuereinheit das Beobachtungsobjektiv auf das sich bewegende, ausgewählte Objekt aus, sodann kann wie vorangehend beschrieben eine Entfernungsmessung vorgenommen werden.

Erkennt die Bildverarbeitung mehrere Objekte, die sich relativ zum optischen Instrument bewegen, insbesondere vergrößern, so werden all diese Objekte ausgewählt und muss die Entfernung zu all diesen Objekten sukzessive bestimmt werden. Bereits vermessene Objekte liegen so nicht mehr im zweiten Umgehungsbereich, den das Beobachtungsobjektiv aktuell erfaßt. Um diese Objekte jedoch weiterhin im Hinblick auf drohende Kollisionen überwachen zu können, werden diese Objekte anhand der zeitlich aufgenommenen Sequenzen von Übersichtsbildern, die nach der Entfernungsbestimmung aufgenommen werden, analysiert. Anhand der Veränderungen bezüglich Lage und/oder Größe bzw. der Winkelgeschwindigkeit lassen sich dann auch Änderungen der Entfernung in einem gewissen Genauigkeitsbereich bestimmen. Verwendet man einen Flächendetektor, der eine Entfernungsmessung erlaubt, vereinfacht sich die Überwachung dieser Objekte etwas.

In einer besonders bevorzugten Ausgestaltung des optischen Instruments umfasst das Übersichtsobjektiv ein im Winkel von 360° abbildendes Ringobjektiv, vorzugsweise eine Ringlinse mit einer zylinder-, kegel- oder ballförmigen Mantelfläche, einer sphärischen, verspiegelten Innenfläche und einer ebenen oder kegelförmigen Stirnfläche. In diesem Fall ist auch das Bild, welches von dem Übersichtsobjektiv mit Hilfe der Abbildungsoptik auf den mindestens einen Flächendetektor, bei dem es sich beispielsweise um einen üblichen CCD-oder CMOS-Chip handeln kann, ringförmig, wobei der innere Bereich des Rings frei bleibt. In diesen inneren Bereich des Rings wird das Bild des Beobachtungsobjektivs abgebildet, beide Objektive beeinflussen sich gegenseitig also nicht, ihre Bilder können vollständig genutzt werden, da keine Abschattungen auftreten. Anstelle einer Ringlinse kann auch eine kugelförmige Linse verwendet werden. Um die Genauigkeit der stereoskopischen Messung zu erhöhen bzw. zu variieren, ist es zweckmäßig, wenn der vorgegebene Abstand des Beobachtungsobjektivs entlang der Symmetrieachse variabel einstellbar ist. Dies kann beispielsweise über die Steuereinheit realisiert werden, die dazu einen Aktor zur Verstellung des Abstands zwischen dem Beobachtungsobjektiv und dem Übersichtsobjektiv ansteuert. Dabei muss dafür Sorge getragen werden, dass die Änderung der Einstellung bei der Berechnung der Entfernung berücksichtigt wird, der Abstand geht als Parameter unmittelbar in die Bildverarbeitung mit ein.

Übersichtsobjektiv und/oder Beobachtungsobjektiv können auch als Varioobjektive mit variabler Brennweite ausgestaltet sein. Dies ermöglicht eine noch flexiblere Anpassung an verschiedene Größen und Entfernungen von Objekten. Die Vergrößerung des Beobachtungsobjektivs ist bevorzugt höher als die des Übersichtsobjektivs, so dass das Detail, auf das das Beobachtungsobjektiv ausgerichtet wird, mit höherer Auflösung dargestellt werden kann. Außerdem ist es auch möglich, eines der beiden Objektive oder beide Objektive so auszugestalten, dass die Vergrößerungen in zwei senkrecht aufeinander stehenden Richtungen unterschiedlich sind, bzw. variieren. Um weiter entfernte Objekte in der Überwachung zur Kollisionsvermeidung beispielsweise möglichst genau abbilden zu können und frühzeitig eine Entfernungsbestimmung durchführen zu können, ist es durchaus sinnvoll, beim Übersichtsobjektiv in horizontaler Richtung eine höhere Vergrößerung zu wählen als in vertikaler Richtung, insbesondere wenn das optische Instrument in einer gewissen Höhe angebracht ist. Objekte, die eher in vertikaler Richtung erfaßt werden, sind bereits näher am optischen Instrument und von daher auch mit geringerer Vergrößerung genauer zu vermessen. Während diese unterschiedlichen Vergrößerungen bei der Bildbearbeitung ohne Weiteres berücksichtigt werden können, ist zur Darstellung auf einem Bildschirm für einen Beobachter eine vorherige Entzerrung des Bildes sinnvoll.

Um den Verarbeitungsaufwand so gering wie möglich zu halten, ist es vorteilhaft, Übersichtsbilder mit einer geringeren Frequenz aufzuzeichnen als die Beobachtungsbilder. Da mittels des Beobachtungsobjektivs die Entfernung zu den ausgewählten Objekten genauer als mit dem Übersichtsobjektiv bestimmt wird, ist hier eine höhere Abtastfrequenz von Vorteil, während das Übersichtsobjektiv für die grobe Bestimmung der Entfernung benutzt werden kann, wenn entsprechende Mittel dafür vorgesehen sind, wie beispielsweise ein räumlich auflösender Flächendetektor.

Während in einer einfachen Ausgestaltung nur ein Flächendetektor verwendet wird, ist auch die Verwendung mehrerer Flächendetektoren möglich, beispielsweise wenn in das optische Instrument zusätzlich ein Punkt-Entfernungsmesser wie ein Laserentfernungsmesser integriert ist. Dessen Messung kann auf einem anderen Sensor verarbeitet werden. Als Sensoren eignen sich insbesondere CMOS-Sensoren, da diese mit hoher Frequenz auch partiell ausgelesen werden können, was insbesondere auch das Auslesen mit unterschiedlichen Abtastfrequenzen erleichtert.

Anstelle eines rein zweidimensionalen Flächendetektors lassen sich auch räumlich auflösende Flächendetektoren verwenden, also mit Sensoren in den einzelnen Positionen der Matrix, die mit Mitteln zur Laufzeitmessung ausgestaltet sind. Geeignet sind beispielsweise Photomisch-Sensoren (PMD). Die zur Laufzeitmessung notwendige aktive, in der Regel infrarotes Licht abstrahlende Beleuchtungsquelle ist dabei entweder ringförmig um die Ringlinse angeordnet, oder aber kreisförmig um die äußerste Linse des Beobachtungsobjektivs. Zur Entfernungsbestimmung ist dann das Beobachtungsobjektiv nicht zwingend notwendig, muss also nicht unbedingt ein Detail des Übersichtsbildes aufnehmen. Zur genaueren Entfernungsbestimmung muss das Beobachtungsobjektiv jedoch wieder auf das Objekt ausgerichtet werden.

Auch bei der Verwendung von räumlich auflösenden Sensoren im Flächendetektor können Übersichtsbild und Beobachtungsbild gleichzeitig auf eine Matrix des Flächendetektors abgebildet werden, alternativ ist aber auch eine alternierende Abbildung der Bilder auf die Matrix des Detektors möglich, falls beispielsweise nur eines der Objektive über eine aktive Beleuchtung zur Entfernungsbestimmung verfügt. Auch die Verwendung mehrerer räumlich auflösender Sensoren und/oder mehrerer zweidimensional arbeitender Sensoren ist möglich, auch die Kombination von räumlich auflösenden und rein zweidimensional abbildenden Sensoren ist eine denkbare Variante. Übersichtsbild und Beobachtungsbild können dann jeweils auf verschiedene, für die Bilder optimierte Flächendetektoren abgebildet werden.

Die Aufgabe wird auch durch ein Verfahren zur optischen Überwachung des Raumes in der Umgebung von sich bewegenden Fahrzeugen gelöst, welches insbesondere das vorangehend beschriebene optische Instrument verwendet, und bei dem einerseits mit einem Übersichtsobjektiv kontinuierlich ein erster Umgebungsbereich zirkular um einen Symmetrieachse des Übersichtsobjektivs erfaßt wird, und andererseits mit einem Beobachtungsobjektiv ein zweiter Umgebungsbereich erfaßt wird, wobei die optische Achse des Beobachtungsobjektivs senkrecht zur Symmetrieachse des Übersichtsobjektivs ausgerichtet ist und sich das Beobachtungsobjektiv in einem vorgegebenen Abstand entlang der Symmetrieachse zum Übersichtsobjektiv befindet. Über eine Abbildungsoptik wird der erste Umgebungsbereich als Übersichtsbild und der zweite Umgebungsbereich als Beobachtungsbild gleichzeitig auf mindestens einen Flächendetektor abgebildet. Eine Auswerteeinheit nimmt eine Bildauswertung vor und bestimmt für ausgewählte Objekte, die sowohl im Übersichtsbild als auch im Beobachtungsbild erkannt werden, die Entfernung zu diesen Objekten und übermittelt die Entfernung an eine Steuereinheit zur weiteren Verwertung. Je nach bestimmter Entfernung kann die Steuereinheit dem Bediener des Fahrzeuges Hinweise geben, dass das Fahrzeug sich beispielsweise einem Objekt nähert bzw. ein Objekt sich dem Fahrzeug, und bei Beibehaltung der Bewegungsrichtung eine Kollision droht. Bei einer automatischen Steuerung des Fahrzeugs kann die Steuereinheit allerdings auch selbst entsprechende Maßnahmen einleiten, um eine Kollision zu vermeiden, beispielsweise um ein Hindernis herumlenken, anhalten, etc. Beobachtungsobjektiv und Übersichtsobjektiv sind dabei räumlich von einander entkoppelte und unabhängig ansteuerbare Einheiten, erst mittels der Abbildungsoptik werden die Strahlengänge vereint. Auf diese Weise erhält man eine hohe Flexibilität gegenüber einem Objektiv mit einer einstückig gefertigten Linse, auch das Problem des in sich selbst abgebildeten Kamerasystems bzw. Flächendetektors läßt sich bei entsprechender Ausgestaltung des Übersichtsobjektivs vermeiden.

In einer bevorzugten Ausgestaltung des Verfahrens zeichnet der Flächendetektor zeitlich sequentiell Übersichtsbilder auf. Diese werden von der Auswerteeinheit hinsichtlich sich relativ zum Fahrzeug bewegender Objekte mittels einer Bildverarbeitung analysiert. Falls ein solches, sich bewegendes und insbesondere sich vergrößerndes Objekt erkannt wird, übermittelt die Auswerteeinheit der Steuereinheit die anhand der Sequenz von Übersichtsbildern bestimmte ungefähre Position. Die Steuereinheit wählt dieses Objekt dann aus, so dass dieses Objekt dann zu den ausgewählten Objekten gehört. Anschließend wird das Beobachtungsobjektiv auf das sich bewegende Objekt ausgerichtet, woraufhin die Auswerteeinheit mit der Bildverarbeitung wiederum die Entfernung zu diesem Objekt bestimmt. Dabei macht man sich die Tatsache zu Nutze, dass Übersichtsobjektiv und Beobachtungsobjektiv das ausgewählte Objekt aus leicht unterschiedlichen Blickwinkeln beobachten, was eine stereoskopische Analyse beispielsweise mit Hilfe von Triangulationsverfahren ermöglicht. Übersichtsobjektiv und Beobachtungsobjektiv können dabei verglichen mit den im Stand der Technik bekannten Spiegelsystemen in einem größeren Abstand zueinander angeordnet sein, was die Genauigkeit der stereoskopischen Messung erhöht.

Ist für ein ausgewähltes Objekt bereits einmal die Entfernung mittels der stereoskopischen Messung bestimmt worden, so kann eine weitere Überwachung der Entfernung anhand der Übersichtbilder vorgenommen werden, ohne dass das Beobachtungsobjektiv zur Hilfe genommen wird. Dies erfolgt, indem die Auswerteeinheit die Veränderung der Größe und/oder der Position des ausgewählten Objekts zwischen zwei zeitlich aufeinander folgend aufgenommenen Übersichtsbildern analysiert. Das Beobachtungsobjektiv kann währenddessen auf ein anderes Objekt gerichtet sein. Eine weitere Entfernungsbestimmung zu ausgewählten Objekten kann ergänzend auch mittels Punkt-Lasermessung und/oder Ultraschall und/oder Radar erfolgen, weiterhin kann auch ein räumlich auflösender Flächendetektor verwendet werden, der die Entfernungen mit Hilfe von Laufzeitmessungen elektromagnetischer Wellen bestimmt.

Das vorangehend beschriebene optische Instrument läßt sich insbesondere auch zur Durchführung eines Verfahrens mit den vorangehend beschriebenen Verfahrensschritten verwenden, um automatisch Kollisionen bei landwirtschaftlich genutzten Fahrzeugen zu vermeiden oder ein Fahrzeug relativ zu einem anderen Fahrzeug oder entlang eines gewünschten Weges selbsttätig zu lenken.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: die Einbindung eines optischen Instruments zur Beobachtung in ein System mit Auswerteeinheit und Steuereinheit,
- Fig. 2: den grundsätzlichen Aufbau eines optischen Instruments zur Überwachung der Umgebung,
- Fig. 3: ein Bild, welches das optische Instrument aufnimmt und wie es sich einem Beobachter darstellt,
- Fig. 4: ein entsprechendes Bild, wie es auf einen Flächendetektor abgebildet wird, und
- Fig. 5: eine schematische seitliche Ansicht einer landwirtschaftlichen Erntemaschine in Form eines Mähdreschers mit einem auf der Kabine angebrachten optischen Instrument.

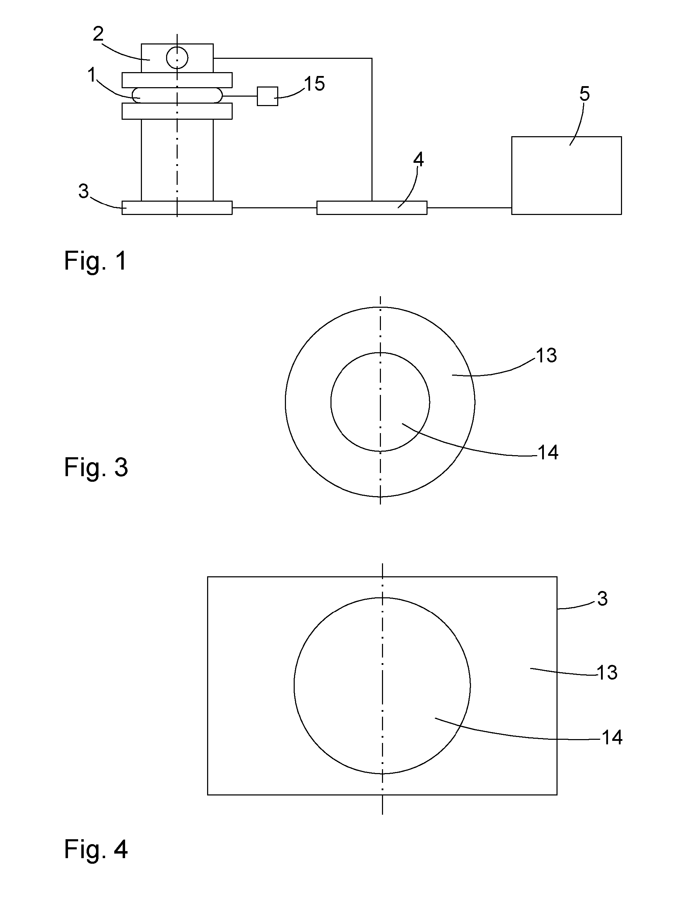

In der Figur 1 ist zunächst der grundsätzliche Aufbau eines optischen Instruments gezeigt, mit dem die Umgebung bevorzugt automatisiert beobachtet werden kann, und welches zur Kollisionsvermeidung und/oder zur selbsttätigen Lenkung eines Fahrzeugs, das parallel zu einem anderen Fahrzeug herfährt, beispielsweise bei Überladevorgängen von Erntegut oder bei der gleichzeitigen Bearbeitung eines Felds mit zwei Fahrzeugen eingesetzt werden kann. Das optische Instrument umfasst ein Übersichtsobjektiv, welches hier als Ringlinse 1 ausgestaltet ist und eine Symmetrieachse aufweist. Die Symmetrieachse entspricht der Rotationsachse, die die Rotationssymmetrie für beliebig kleine Winkel definiert, sie liegt in der Zeichenebene und verläuft in dieser vertikal. Das Übersichtsobjektiv erfaßt einen ersten Umgebungsbereich zirkular um die Symmetrieachse. Das optische Instrument umfasst außerdem ein Beobachtungsobjektiv 2, welches einen zweiten Umgebungsbereich erfaßt. Das Beobachtungsobjektiv 2 ist auf der Symmetrieachse in einem vorgegebenen Abstand zum Übersichtsobjektiv angeordnet. Seine optische Achse steht senkrecht zur Symmetrieachse des Übersichtsobjektivs, es ist um die Symmetrieachse um 360° schwenkbar. Anstelle einer Ringlinse 1 kann auch ein sphärisch geformtes Objektiv verwendet werden.

Das optische Instrument umfasst weiter einen Flächendetektor 3, eine Abbildungsoptik, die die von dem Übersichtsobjektiv und dem Beobachtungsobjektiv 2 erfaßten Umgebungsbereiche gleichzeitig als Übersichtsbild bzw. Beobachtungsbild auf den mindestens einen Flächendetektor 3 abbildet, eine Steuereinheit 4, die so ausgelegt ist, dass sie mindestens das Beobachtungsobjektiv 2 ansteuert, sowie eine Auswerteeinheit 5, die eine Bildauswertung vornimmt und für ausgewählte Objekte, die sowohl im Übersichtsbild als auch im Beobachtungsbild erkannt sind, die Entfernung zu diesen Objekten bestimmt und an die Steuereinheit 4 zur weiteren Verwertung übermittelt. Steuereinheit 4 und Auswerteeinheit 5 können auch gemeinsam als eine Einheit ausgeführt sein, die sowohl Auswerte- als auch Steuerfunktionen übernimmt.

Die vom Flächendetektor 3 aufgezeichneten Bilder können auf einen hier nicht gezeigten Monitor ausgegeben werden, so dass ein Beobachter eine Auswertung hinsichtlich interessanter Objekte vornehmen kann. Interessante Objekte sind beispielsweise im Rahmen der Kollisionsvermeidung solche, die sich relativ zum optischen Instrument, welches auf einem Fahrzeug angebracht sein kann, bewegen und sich bezogen auf eine zeitliche Sequenz von Übersichtsbildern vergrößern. Solche Objekte werden dann ausgewählt; der Bediener kann dann das Beobachtungsobjektiv 2 auf ein solches ausgewähltes Objekt ausrichten, die Entfernung kann dann automatisch bestimmt werden, wobei der Abstand der beiden Objektive entlang der Symmetrieachse zur Hilfe genommen wird, d,h. der stereoskopische Effekt auf Grund unterschiedlicher Blickwinkel aus Übersichtsobjektiv und Beobachtungsobjektiv 2 auf das Objekt. Je größer der Abstand ist, desto genauer kann die Messung erfolgen. Unter Umständen kann es auch vorteilhaft sein, den Abstand variabel zu gestalten, so dass er beispielsweise je nach Objektgröße variabel vorgegeben werden kann.

Bevorzugt erfolgt die Überwachung des Raumes jedoch automatisch. Dazu zeichnet der Flächendetektor 3 zeitlich sequentiell Übersichtsbilder auf. Die Auswerteeinheit 5 analysiert diese mit Hilfe einer Bildverarbeitung hinsichtlich sich relativ zum optischen Instrument bewegender Objekte. Falls ein solches, sich bewegendes und insbesondere sich vergrößerndes - also sich dem optischen Instrument näherndes - Objekt erkannt wird, übermittelt die Auswerteeinheit 5 der Steuereinheit 4 die anhand der Sequenz von Übersichtsbildern bestimmte Position, so dass die Steuereinheit 4 dieses Objekt auswählen und das Beobachtungsobjektiv 2 auf das sich bewegende Objekt ausrichten kann, insbesondere durch Ansteuerung eines zur Verdrehung des Beobachtungsobjektivs um die Symmetrieachse dienenden Aktors 15. Die Auswerteeinheit 5 bestimmt dann wie oben beschrieben die Entfernung zu diesem Objekt.

Falls mehrere solcher Objekte gefunden und ausgewählt werden, so erfolgt die Bestimmung der Entfernung sukzessive für alle Objekte nacheinander. Eine weitere Überwachung der Entfernung zu den ausgewählten Objekten erfolgt (nach der genauen Bestimmung der Entfernung mit Hilfe der stereoskopischen Effekte, das heißt der unterschiedlichen Blickwinkel, aus denen das Objekt mit den beiden Objektiven beobachtet wird), ausschließlich anhand der Übersichtsbilder. Dazu analysiert die Auswerteeinheit 5 mit ihrer Bildeinheit die Veränderung der Größe und/oder der Position in zeitlich aufeinanderfolgend aufgenommenen Übersichtsbildern. Anhand der Veränderungen können mit einer reduzierten Genauigkeit, die abhängig von der Vergrößerung des Übersichtsobjektivs ist, die Entfernung zu dem jeweiligen ausgewählten Objekt bestimmt und überwacht werden, sofern kein Flächendetektor 3 mit räumlich auflösenden Sensorelementen verwendet wird. Ergänzend kann auch eine weitere Entfernungsbestimmung zu den ausgewählten Objekten mittels Punkt-Laser-Messung erfolgen, dies erhöht jedoch den Aufwand.

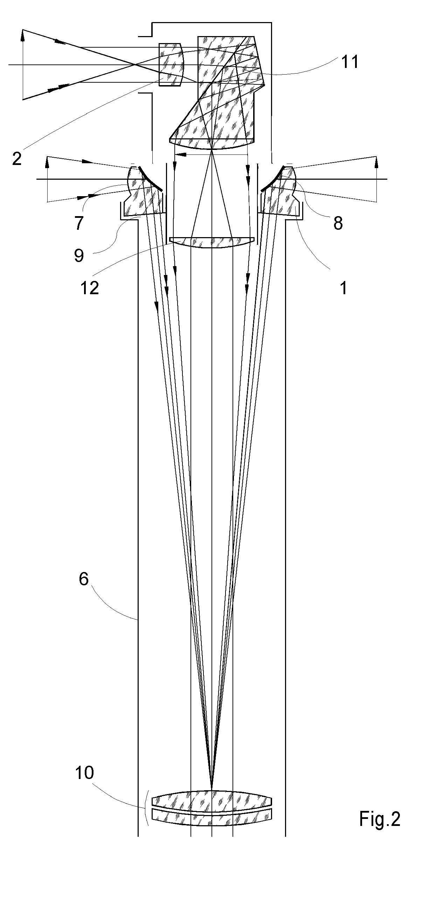

In Fig. 2 ist der optische Teil des optischen Instruments mit einem entsprechenden Strahlengang etwas detaillierter dargestellt. Die Ringlinse 1 befindet sich am oberen Ende eines Abbildungstubus 6, dargestellt ist das System in einem Längsschnitt. Die Ringlinse bildet den ersten Umgebungsbereich in einem Winkel von 360°, also zirkular ab. Die Ringlinse hat hier eine ballförmige Mantelfläche 7. Die Mantelfläche kann aber auch zylinder-oder kegelförmig ausgestaltet sein. Das von einem Objekt kommende Licht tritt durch die Mantelfläche 7 in die Linse ein und wird an einer sphärischen und verspiegelten Innenfläche 8 in Richtung des Abbildungstubus 6 reflektiert. An einer ebenen Stirnfläche 9 tritt das Licht dann in den Abbildungstubus 6. Die Stirnfläche 9 kann alternativ auch kegelförmig ausgestaltet sein. Am anderen Ende des Abbildungstubus 6 befindet sich ein Linsenpaar 10, welches Teil der Abbildungsoptik ist und das Licht auf den Flächendetektor 3 leitet.

Licht, welches von einem Objekt - dargestellt wie auch bei der Ringlinse 1 durch den vertikalen Pfeil - in das Beobachtungsobjektiv 2 tritt, wird über eine Prismen-LinsenKombination 11 und eine Linse 12 ebenfalls in den Abbildungstubus 6 geleitet und über das Linsenpaar 10 ebenfalls auf den Flächendetektor 3 gelenkt. Ein Beobachter sieht dann das Übersichtsbild in einem Übersichtbildbereich 13 und das Beobachtungsbild in einem Beobachtungsbildbereich 14, wie sie in Fig.3 dargestellt sind. Aufgrund der Strahlführung erfolgt keine gegenseitige Abschattung der Objektive, beide beeinflussen sich nicht gegenseitig. Das gleiche Bild wie in Figur 3 entsteht im Prinzip auch auf dem Flächendetektor 3, was in Fig.4 nicht maßstabsgetreu gezeigt ist. Die Randbereiche des Übersichtsbildbereichs rechts und links sind in der Regel abgedunkelt, das Übersichtsbild wird jedoch vollständig auf den Flächendetektor 3 abgebildet. Erfolgt die Bildauswertung automatisiert mit Hilfe eines in der Auswerteeinheit 5 implementierten Bildverarbeitungsverfahrens, so können die Prismen der Prismen-Linsenkombination 11 auch durch einen Spiegel oder ein einfaches 45°-Prisma ersetzt werden, da das Drehen und Wenden des Bildes für die Bildverarbeitung nicht notwendig ist. Da die Bildauswertung einige spezielle, an das optische Instrument angepaßte Auswerteroutinen benötigt, ist für eine schnelle Bearbeitung die Verwendung spezieller Schaltstrukturen wie von feldprogrammierbaren Gattern (FPGA, field programmable gate array) und digitalen Signalprozessoren (DSP) vorteilhaft. Als Sensorarray des Flächendetektors kann beispielsweise ein CCD-Chip verwendet werden, besonders vorteilhaft ist aber die Verwendung eine CMOS-Chips, da dieser ein teilweises Auslesen der Bildelemente mit hoher Frequenz ermöglichst. Auf diese Weise ist es beispielsweise möglich, dass die Auswerteeinheit fünf Übersichtsbilder mit einer zeitlich geringeren Frequenz als Beobachtungsbilder aufzeichnet. In der Regel wird das Beobachtungsbild mit einer höheren Frequenz ausgelesen, da mit Hilfe dieses Bildes eine genaue Entfernungsbestimmung durchgeführt werden kann. Die Abtastfrequenz für das Auslesen des Übersichtsbildes kann geringer sein, da dies nur für die grobe Entfernungsbestimmung bzw. für die Überwachung der Entfernung zu bereits ausgewählten und vermessenen Objekten notwendig ist, hier wird die relative Bewegung zum Sensor mittels der Winkelgeschwindigkeit ermittelt. Die Abtastfrequenzen können dabei auch in Abhängigkeit von äußeren Parametern vorgegeben werden, beispielsweise in Abhängigkeit von der Geschwindigkeit des Fahrzeugs.

Für die Ausgestaltung des mindestens einen Flächendetektors 3 sind verschiedene Varianten möglich. Im einfachsten Fall handelt es sich um ein einfaches Array aus flächig auflösenden Sensoren, auf dem beide Bilder abgebildet werden. Es lassen sich aber auch mehrere Sensoren verwenden, die beispielsweise gekoppelt werden können, so dass jeder der Sensoren einen Teil des gesamten in Fig.4 gezeigten Bildes anzeigt, Übersichtsbild und Beobachtungsbild können aber auch auf verschiedene Sensoren abgebildet werden. Die nur in der Ebene auflösenden Sensoren des Flächendetektors 3 können auch gekoppelt mit einem Punkt-Entfernungsmesser durch das Beobachtungsobjektiv, beispielsweise eine Laser-Entfernungsmesser, eingesetzt werden.

Anstelle eines einfachen, nur in der Ebene auflösenden Flächendetektors 3 lassen sich aber auch räumlich auflösende Flächendetektoren 3 verwenden. Es handelt sich dabei grundsätzlich ebenfalls um Flächendetektoren 3, die jedoch zusätzlich zur Registrierung der Intensität empfangener Signale über Mittel zur Berechnung der Entfernung zwischen den einzelnen Elementen der Matrix des Detektors und der Oberfläche eines Objekts verfügen.

Zur Bestimmung der Entfernung kann das Objekt mit moduliertem Infrarotlicht beleuchtet werden, die Entfernungsbestimmung erfolgt mittels der Messung von Laufzeitunterschieden. Das von den Sensorelementen empfangene Lichtsignal wird durch die Sensorelemente demoduliert und mit einem Referenzsignal korreliert. Aus der Phasenverschiebung läßt sich die Tiefeninformation mit einer Genauigkeit von einigen Metern bestimmen. Diese Art von Sensoren wird auch als Photomischsensoren (PMD) bezeichnet und lassen sich auch mit dem hier beschriebenen optischen Instrument verwenden. In diesem Fall wird eine aktive Beleuchtungsquelle benötigt, die das entsprechende, modulierte Licht aussendet. Diese kann beispielsweise ringförmig um die Linse 1 angeordnet sein, und/oder kreisförmig um das Beobachtungsobjektiv 2.

Das optische Instrument kann weiterhin so ausgestaltet sein, dass der vorgegebene Abstand des Beobachtungsobjektivs 2 vom Übersichtsobjektiv entlang der Symmetrieachse variabel einstellbar ist, insbesondere mittels eines durch die Steuereinheit 4 angesteuerten Aktors (nicht gezeigt). Übersichtsobjektiv und/oder Beobachtungsobjektiv 2 können auch als VarioObjektive mit variabler Brennweite ausgestaltet sein, so dass ein Zoomen möglich wird, insbesondere mittels jeweils eines durch die Steuereinheit 4 angesteuerten Aktors (nicht gezeigt). Dies ist in der Bildauswertung entsprechend zu berücksichtigen. In der Regel wird dabei die Vergrößerung des Beobachtungsobjektivs 2 höher als die des Übersichtsobjektivs sein, da mit dem Beobachtungsobjektiv 2 ein Detail beobachtet werden soll. Entsprechend muss auch berücksichtigt werden, wenn beispielsweise der Abstand des Beobachtungsobjektivs 2 entlang der Symmetrieachse variabel einstellbar ist.

Außerdem ist es möglich, sowohl das Übersichtsobjektiv als auch das Beobachtungsobjektiv 2 so auszugestalten, dass die Vergrößerungen der Objektive in zwei senkrecht aufeinander stehenden Richtungen unterschiedlich sind. Für die Kollisionsüberwachung ist es beispielsweise möglich, die Ringlinse so auszugestalten, dass der horizontale Bereich gegenüber dem darüber- bzw. darunterliegenden Bereich vergrößert abgebildet wird, da dies die Genauigkeit erhöht und sich in der Regel direkt oberhalb eines Fahrzeugs bzw. unterhalb des Fahrzeugs keine Objekte befinden sollten, wenn die Kollisionsüberwachung korrekt funktioniert. Für einen Beobachter kann das aufgenommene Bild dann entsprechend entzerrt werden, bei einer automatischen Überwachung kann die Bildverarbeitung diese Entzerrung anhand der Objektivdaten selbst berücksichtigen.

Wird das optische Instrument mit mindestens einem Flächendetektor, der räumlich auflösende Sensorelemente umfasst, betrieben, so muss das Beobachtungsobjektiv 2 zur Überwachung nicht zwangsläufig ein Teilbild des Übersichtsobjektivs sehen, da die Entfernungsbestimmung dann auch allein anhand des Übersichtsbildes erfolgen kann. Erst wenn ein Objekt sich auf eine Entfernung unterhalb eines Schwellenwertes nähert, kann beispielsweise die Entfernung mit dem Beobachtungsobjektiv 2 genauer bestimmt werden. Die anschließende Überwachung kann wieder mit dem Übersichtsobjektiv allein erfolgen, wobei hier die Entfernungsbestimmung gegenüber der vorangehend beschriebenen Methode für Flächendetektoren ohne räumlich auflösende Sensorelemente, die auf der Bestimmung der Winkelgeschwindigkeiten basiert, vereinfacht ist.

Auch eine Kombination von räumlich auflösenden Flächendetektoren mit üblichen Flächendetektoren ist denkbar, wenn beispielsweise das Übersichtsbild auf einen räumlich auflösenden Flächendetektor abgebildet wird und das Beobachtungsbild auf einen hochauflösenden, nur die Intensitäten registrierenden Flächendetektor. Auch die Verwendung zusätzlicher Beleuchtungsquellen, die den Betrieb einer Kollisionsüberwachung auch in der Nacht ermöglichen, ist denkbar. Dabei muss darauf geachtet werden, dass das Beleuchtungslicht nicht direkt zu einer Übersprechung des Lichtes in den Objektiven führt. Dies gilt auch für die aktiven Beleuchtungsquellen, die in Verbindung mit den räumlich auflösenden Flächendetektoren verwendet werden. Weiter ist darauf zu achten, dass keine Beeinflussung von Beleuchtungseinheiten auf unterschiedlichen Fahrzeugen oder in der Umgebung auf das System stattfinden.

Das vorangehend beschriebene optische Instrument ist besonders gut für die Verwendung zur automatischen Kollisionsvermeidung in landwirtschaftlich genutzten Fahrzeugen geeignet. Diese Maschinen werden nur mit geringen Geschwindigkeiten bewegt, so dass auch eine automatische Steuerung möglich ist.

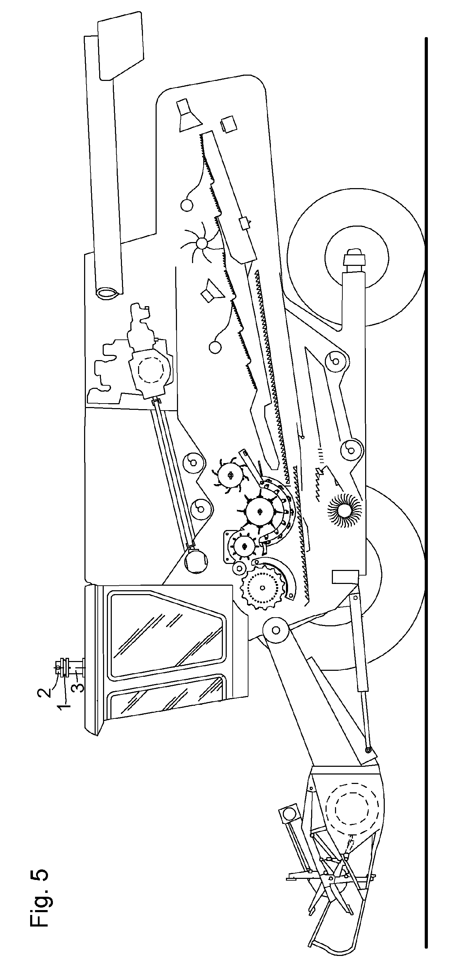

Weiter könnte dieses System zur Erkennung von Formen/Kanten im Feld verwendet werden, wie beispielsweise Schnittkanten, Fahrgassen, Schwade, Baumreihen oder Furchen, um das Fahrzeug (vgl. den Mähdrescher in Figur 5) selbsttätig auf einem gewünschten Weg zu lenken. Ebenso ist es vorstellbar, die relative räumliche Position von Anbaugeräten oder Frontladern mit dieser Technik zu erfassen.

## Patentansprüche

1. Optisches Instrument zur Beobachtung der Umgebung, umfassend:
ein Übersichtsobjektiv mit einer Symmetrieachse, welches einen ersten Umgebungsbereich zirkular um die Symmetrieachse erfaßt,
ein Beobachtungsobjektiv (2), welches einen zweiten Umgebungsbereich erfaßt und auf der Symmetrieachse in einem vorgegebenen Abstand zum Übersichtsobjektiv um die Symmetrieachse um vorzugsweise 360° schwenkbar angeordnet ist, und dessen optische Achse senkrecht zur Symmetrieachse des Übersichtsobjektivs angeordnet ist,
mindestens einen Flächendetektor (3),
eine Steuereinheit (4), die so ausgestaltet ist, dass sie mindestens das Beobachtungsobjektiv (2) ansteuert,
eine Abbildungsoptik (5), die den ersten und den zweiten Umgebungsbereich gleichzeitig als Übersichtsbild und Beobachtungsbild auf den mindestens einen Flächendetektor (3) abbildet,
und eine Auswerteeinheit (5), die so ausgestaltet ist, dass sie eine Bildauswertung vornimmt und für ausgewählte Objekte, die sowohl im Übersichtsbild als auch im Beobachtungsbild erkannt sind, anhand des Abstandes zwischen Übersichtsobjektiv und Beobachtungsobjektiv (2) die Entfernung zu diesen Objekten bestimmt und an die Steuereinheit (4) zur weiteren Verwertung übermittelt.

2. Optisches Instrument nach Anspruch 1, **dadurch gekennzeichnet, dass** die Auswerteeinheit (5) zeitlich sequentiell vom Flächendetektor (3) aufgezeichnete Übersichtsbilder hinsichtlich sich relativ zum optischen Instrument bewegender Objekte analysiert, und falls ein solches sich bewegendes, insbesondere sich vergrößerndes Objekt erkannt wird, der Steuereinheit (4) die anhand der Sequenz von Übersichtsbildern bestimmte Position übermittelt, und die Steuereinheit (4) das Beobachtungsobjektiv (5) auf das sich bewegende Objekt ausrichtet.

3. Optisches Instrument nach Anspruch 1 oder 2, **dadurch gekennzeichnet, dass** die Auswerteeinheit (5) für die ausgewählten Objekte nach Bestimmung der Entfernung die Veränderung der Größe und / oder Position in zeitlich sequentiell aufgenommenen Übersichtsbildern analysiert und anhand der Veränderungen Änderungen der Entfernung bestimmt.

4. Optisches Instrument nach einem der Ansprüche 1 bis 3, **dadurch gekennzeichnet, dass** das Übersichtsobjektiv ein im Winkel von 360° abbildendes Ringobjektiv umfasst, vorzugsweise eine Ringlinse (1) mit einer zylinder-, kegel- oder ballförmigen Mantelfläche (7), einer sphärischen, verspiegelten Innenfläche (8) und einer ebenen oder kegelförmigen Stirnfläche (9).

5. Optisches Instrument nach einem der Ansprüche 1 bis 4, **dadurch gekennzeichnet, dass** der vorgegebene Abstand des Beobachtungsobjektivs (2) entlang der Symmetrieachse variabel einstellbar ist.

6. Optisches Instrument nach einem der Ansprüche 1 bis 5, **dadurch gekennzeichnet, dass** das Übersichtsobjektiv und/oder das Beobachtungsobjektiv (2) als Vario-Objektiv mit variabler Brennweite ausgestaltet ist.

7. Optisches Instrument nach einem der Ansprüche 1 bis 6, **dadurch gekennzeichnet, dass** die Vergrößerung des Übersichtsobjektivs und/oder des Beobachtungsobjektivs (2) in zwei senkrecht aufeinander stehenden Richtungen unterschiedlich ist.

8. Optisches Instrument nach einem der Ansprüche 1 bis 7, **dadurch gekennzeichnet, dass** der mindestens eine Flächendetektor (3) eine Matrix aus räumlich auflösenden Sensoren, bevorzugt PMD-Sensoren umfasst, wobei mindestens eine aktive Beleuchtungsquelle zur Entfernungsbestimmung mittels des Flächendetektors um mindestens eines der beiden Objektive angeordnet ist.

9. Optisches Instrument nach einem der Ansprüche 1 bis 8, **dadurch gekennzeichnet, dass** der Flächendetektor (3) Übersichtsbilder mit einer geringeren Frequenz als Beobachtungsbilder aufzeichnet und/oder die Auswerteeinheit (5) Übersichtsbilder mit einer geringeren Frequenz als Beobachtungsbilder auswertet.

10. Landwirtschaftliches Fahrzeug mit einem Fahrgestell, einem Antrieb und einer selbsttägigen Lenkeinrichtung, die mit dem Ausgang der Steuereinheit (4) eines optischen Instruments nach einem der vorhergehenden Ansprüche verbunden und betreibbar ist, das Fahrzeug anhand der Ausgangssignale der Steuereinheit (4) selbsttägig parallel zu einem zweiten Fahrzeug oder entlang eines bestimmten Weges zu führen.

11. Landwirtschaftliches Fahrzeug nach Anspruch 10, **dadurch gekennzeichnet, dass** passive oder aktive Ausrichtungsmittel zu vertikalen Ausrichtung der Symmetrieachse des optischen Instruments vorhanden sind.

12. Verfahren zur optischen Überwachung des Raumes in der Umgebung von sich bewegenden Fahrzeugen, bei dem
mit einem Übersichtsobjektiv ein erster Umgebungsbereich zirkular um eine Symmetrieachse des Übersichtsobjektivs erfaßt wird,
mit einem Beobachtungsobjektiv (2) ein zweiter Umgebungsbereich erfaßt wird, wobei die optische Achse des Beobachtungsobjektivs (2) senkrecht zur Symmetrieachse des Übersichtsobjektivs ausgerichtet ist und sich das Beobachtungsobjektiv (2) in einem vorgegebenen Abstand entlang der Symmetrieachse zum Übersichtsobjektiv befindet,
über eine Abbildungsoptik der erste Umgebungsbereich als Übersichtsbild und der zweite Umgebungsbereich als Beobachtungsbild gleichzeitig auf mindestens einen Flächendetektor (3) abgebildet werden, und
eine Auswerteeinheit (5) eine Bildauswertung vornimmt und für ausgewählte Objekte, die sowohl im Übersichtsbild als auch im Beobachtungsbild erkannt werden, anhand des Abstandes zwischen Übersichtsobjektiv und Beobachtungsobjektiv (2) die Entfernung zu diesen Objekten bestimmt und an eine Steuereinheit (4) zur weiteren Verwertung übermittelt.

13. Verfahren nach Anspruch 12, **dadurch gekennzeichnet, dass**
der Flächendetektor (3) zeitlich sequentielle Übersichtsbilder aufzeichnet,
die Auswerteeinheit (5) diese hinsichtlich sich relativ zum Fahrzeug bewegender Objekte analysiert, und
falls ein solches sich bewegendes, insbesondere sich vergrößerndes Objekt erkannt wird, die Auswerteeinheit (5) der Steuereinheit (4) die anhand der Sequenz von Übersichtsbildern bestimmte Position übermittelt, die Steuereinheit (4) dieses Objekt auswählt und das Beobachtungsobjektiv (2) auf das sich bewegende Objekt ausrichtet.

14. Verfahren nach Anspruch 12 oder 13, **dadurch gekennzeichnet, dass** für die ausgewählten Objekte nach Bestimmung der Entfernung eine weitere Überwachung der Entfernung anhand der Übersichtsbilder vorgenommen wird, indem die Auswerteeinheit (5) die Veränderung der Größe und / oder Position zwischen zeitlich aufeinanderfolgend aufgenommenen Übersichtsbildern analysiert, wobei vorzugsweise ergänzend eine weitere Entfernungsbestimmung zu den ausgewählten Objekten mittels Punkt-Lasermessung und/oder Ultraschall und/oder Radar erfolgt.

15. Verwendung eines optischen Instruments nach einem der Ansprüche 1 bis 9 zur Durchführung eines Verfahrens nach einem der Ansprüche 12 bis 14 zur automatischen Kollisionsvermeidung in landwirtschaftlich genutzten Fahrzeugen.
